# EUROPÄISCHE PATENTSCHRIFT

(11) **EP 2 622 937 B1**
(45) Veröffentlichungstag und Bekanntmachung des Hinweises auf die Patenterteilung: **24.05.2017**
(21) Anmeldenummer: 11796908.9
(22) Anmeldetag: 23.09.2011
(51) Int. Cl.: H05B 3/66, H05B 3/68

(54) **HEIZLEITERANORDNUNG**
HEATING CONDUCTOR ARRANGEMENT
AGENCEMENT À CONDUCTEUR CHAUFFANT

(30) Priorität: 27.09.2010 AT 6012010 U
(43) Veröffentlichungstag der Anmeldung: 07.08.2013
(73) Patentinhaber: Plansee SE, 6600 Reutte (AT)
(72) Erfinder: MALLAUN, Peter, A-6553 See (AT); RAGGL, Karl, A-6604 Höfen (AT)
(86) Internationale Anmeldenummer: PCT/AT2011/000392
(87) Internationale Veröffentlichungsnummer: WO 2012/040753

(56) Entgegenhaltungen:
- GB-A- 995 089
- JP-A- 7 296 957
- US-A- 3 812 276

## Beschreibung

Die Erfindung betrifft eine elektrische Heizleiteranordnung zur Beheizung eines Ofens, wobei der Heizleiter ein oder mehrere streifenförmige Abschnitte mit einer im Wesentlichen horizontal flächigen Ausdehnung aufweist, die mit einer bogenförmigen Krümmung in Bezug auf eine horizontale Ebene H versehen sind.

Die EP 1 170 979 B1 beschreibt eine entsprechende elektrische Heizleiteranordnung für einen Ofen zum Erwärmen von Glasscheiben. Bei dieser Anordnung ist der Heizleiter in Plattenform hergestellt, wobei durch wechselseitige Schlitzung der Platte mehrere streifenförmige Abschnitte mit einem insgesamt mäanderförmigen Verlauf des Heizleiters erreicht werden. Dieser Mäander ist beidseitig über seine gesamte Erstreckung in entsprechenden Ausnehmungen von feststehenden keramischen Trägereinrichtungen abgestützt und weist zwischen diesen Trägereinrichtungen in Bezug auf eine horizontale Ebene H einen nach oben gekrümmten bogenförmigen Verlauf auf.

Die GB995089 (A) zeigt eine Heizleiteranordnung mit einem schwenkbaren Lagerelement.

Als Werkstoff für den Heizleiter werden Fe-Cr-Al Legierungen und Ni-Cr- Legierungen genannt, womit sich Ofentemperaturen von maximal 1.300°C erzielen lassen.

Im Betrieb, bei der Erwärmung des Heizleiters verstärkt sich durch die temperaturbedingte Ausdehnung des Heizleiterwerkstoffes und durch seine starre Einspannung zwischen den Trägereinrichtungen seine Krümmung. Bei Abkühlung zieht sich der Heizleiter wieder zusammen und geht auf seine ursprüngliche Krümmung zurück. Durch diese dauernde mechanische Wechselbeanspruchung kommt es vielfach zu einer Überbeanspruchung des Heizleitermaterials die zu einem Bruch bzw. vorzeitigen Ausfall des Heizleiters führen kann. Insbesondere bei Verwendung von Heizleitermaterialien wie Mo oder W die zur Erreichung von höchsten Ofentemperaturen in der Größenordnung von 1.700°C und darüber zum Einsatz kommen, führt eine derartige Heizleiteranordnung zu einem schnellen Ausfall des Heizleiters. Die Aufgabe der vorliegenden Erfindung ist es daher eine Heizleiteranordnung zu schaffen, bei welcher der Heizleiter in Folge der Temperaturunterschiede zwischen Betriebs- und Ruhezustand möglichst geringen mechanischen Beanspruchungen ausgesetzt ist und bei der insbesondere auch Heizleitermaterialien für höchste Temperaturen im Bereich von 1.700°C und darüber zum Einsatz kommen können.

Erfindungsgemäß wird dies dadurch erreicht, dass die streifenförmigen Abschnitte durch einzelne Bänder gebildet werden, wobei die Bänder entlang ihrer Breite die bogenförmige Krümmung in Bezug auf die horizontale Ebene H aufweisen und dass die einzelnen Bänder durch mindestens ein im Wesentlichen in Längsrichtung des jeweiligen Bandes verschwenkbares Lagerelement abschnittsweise gelagert sind, welches Lagerelement einen Halteabschnitt aufweist, welcher der Krümmung des Bandes angepasst ist und das Band zumindest teilweise umschließt..

Durch die bogenförmige Krümmung des Heizleiters entlang seiner Breite wird eine hervorragende Eigenstabilität erreicht, die eine über weite Strecken freitragende Anordnung des Heizleiters ermöglicht. Die durch die Temperaturänderung bewirkte Längenänderungen der einzelnen Bänder wird durch das bewegliche Lagerelement ausgeglichen, so dass es zu keinen nennenswerten Spannungen im Material kommt. Die Nachteile der starren Einspannung entsprechend dem Stand der Technik werden dadurch vermieden. Durch die bogenförmige Krümmung des Heizleiters entlang der Breite der Bänder bleibt die Eigenstabilität des Heizleiters selbst bei sehr hohen Temperaturen erhalten, so dass die Anordnung auch für Hochtemperaturheizleiter wie Heizleiter aus Molybdän oder Wolfram geeignet ist.

Indem das Lagerelement einen Halteabschnitt aufweist, welcher der Krümmung des Bandes angepasst ist und das Band zumindest teilweise umschließt, wird erreicht, dass die Krümmung des Bandes und damit seine Eigenstabilität auch bei einer Erwärmung des Heizleiters erhalten bleibt.

In einer weiteren vorteilhaften Ausgestaltung der Erfindung, weist das verschwenkbare Lagerelement zwei Drehachsen auf und ist über die erste Drehachse verschwenkbar mit einem Trägerteil verbunden und über die zweite Drehachse verschwenkbar mit dem Halteabschnitt verbunden.

Auf diese Weise wird eine besonders gute bewegliche Lagerung des Heizleiters verbunden mit einer möglichst guten Unterstützung an den Lagerstellen erreicht.

In einer besonders vorteilhaften Ausgestaltung der Erfindung, besteht das verschwenkbare Lagerelement aus zwei parallelen voneinander beabstandeten Schenkeln, welche an den Drehachsen an gegenüberliegenden Enden der Schenkel durch Lagerbolzen miteinander verbunden sind und ist das Lagerelement über den ersten Lagerbolzen verschwenkar und isoliert am Trägerteil befestigt und über den zweiten Lagerbolzen verschwenkar mit dem Halteabschnitt verbunden.

Mit dieser Ausgestaltung wird eine hervorragende Stabilität der Lagerelemente und eine sichere Befestigung der Lagerelemente am Trägerteil erreicht.

Besonders von Vorteil ist es, wenn mehrere einzelne Bänder parallel zueinander angeordnet sind und ihre Enden wechselweise über Verbindungsstücke miteinander verbunden sind, so dass die Heizleiteranordnung die Form eines Mäanders aufweist.

Auf diese Weise wird auf einfache Weise eine großflächige Heizleiteranordnung zur großflächigen Beheizung eines Ofens ermöglicht.

Dabei ist es von besonderem Vorteil wenn die Stromzuführungen zur Heizleiteranordnung auf derselben Seite des Mäanders liegen.

Durch diese Ausführungen wird erreicht, dass der Heizleiter auf einer Seite, nämlich an der Stelle der Stromzuführung starr fixiert ist und sich bei Erwärmung ungehindert in Richtung von den Stromzuführungen weg ausdehnen kann, ohne dass es zu großen mechanischen Spannungen im Material kommt.

Insbesondere ist es auch von Vorteil, wenn die verschwenkbaren Lagerelemente derart angeordnet sind, dass die jeweilige Verbindungslinie der Drehachsen einen Neigungswinkel α zur horizontalen Ebene H aufweist, derart, dass bei hängender Anordnung des Heizleiters die zweite Drehachse näher zur nächstliegenden Stromzuführung ausgerichtet ist als die erste Drehachse und bei liegender Anordnung des Heizleiters die zweite Drehachse weiter weg von der nächstliegenden Stromzuführung ausgerichtet ist als die erste Drehachse.

Durch die derart geneigte Anordnung der verschwenkbaren Lagerelemente kommt es durch das Eigengewicht des Heizleitermaterials zu einer Zugspannung im Heizleiter, welche ein Durchhängen des Heizleiters aufgrund der verminderten Festigkeit durch die Temperatureinwirkung im Betriebszustand vermindert oder sogar gänzlich verhindert.

Besonders von Vorteil ist es auch, wenn in unmittelbarer Nähe jeder Stromzuführung ein feststehendes Lagerelement für das jeweilige Band angeordnet ist.

Auf diese Weise wird die starre Fixierung der Heizleiteranordnung an der Stelle der Stromzuführung nochmals verstärkt.

Die Eigenstabilität des Heizleiters in Längsrichtung kann auch noch dadurch vergrößert werden, dass die Bänder entlang ihrer Krümmung zwei symmetrisch angeordnete Ausknickungen aufweisen.

Besonders vorteilhaft ist die erfindungsgemäße Heizleiteranordnung für Heizleiter für Hochtemperaturöfen mit einem Heizleiter aus Molybdän oder Wolfram oder Legierungen dieser Metalle geeignet, aber selbstverständlich ist die Anordnung auch für andere Heizleitermaterialien von Vorteil.

Besonders von Vorteil ist es, wenn der Heizleiter und die Lagerelemente aus demselben Werkstoff bestehen. In diesem Fall ist die Formänderung auf Grund der Temperaturbelastungen nahezu identisch, so dass eine besonders gute formstabile Umklammerung des Heizleiters durch die Lagerelemente erreicht wird.

Von Vorteil ist es auch wenn die Stromzuführungen zum Heizleiter laminiert ausgeführt sind und mit stetig abnehmender Materialstärke in den Heizleiter übergehen. Auf diese Weise wird ein abrupter Übergang von den Stromzuführungen zum Heizleiter der vielfach eine gefährdete Bruchstelle bei Temperaturbelastung darstellt, vermieden.

Im Folgenden wird die Erfindung anhand von Zeichnungen näher erläutert.

Es zeigen:
- Figur 1: die Draufsicht auf eine hängende erfindungsgemäße Heizleiteranordnung
- Figur 2: die hängende Heizleiteranordnung nach Figur 1 in vergrößertem Maßstab in Seitenansicht
- Figur 3: eine vergleichbare Heizleiteranordnung wie nach Figur 2 in Seitenansicht in liegender Ausführung
- Figur 4: ein verschwenkbares Lagerelement nach Figur 1, teilweise geschnitten, in vergrößertem Maßstab

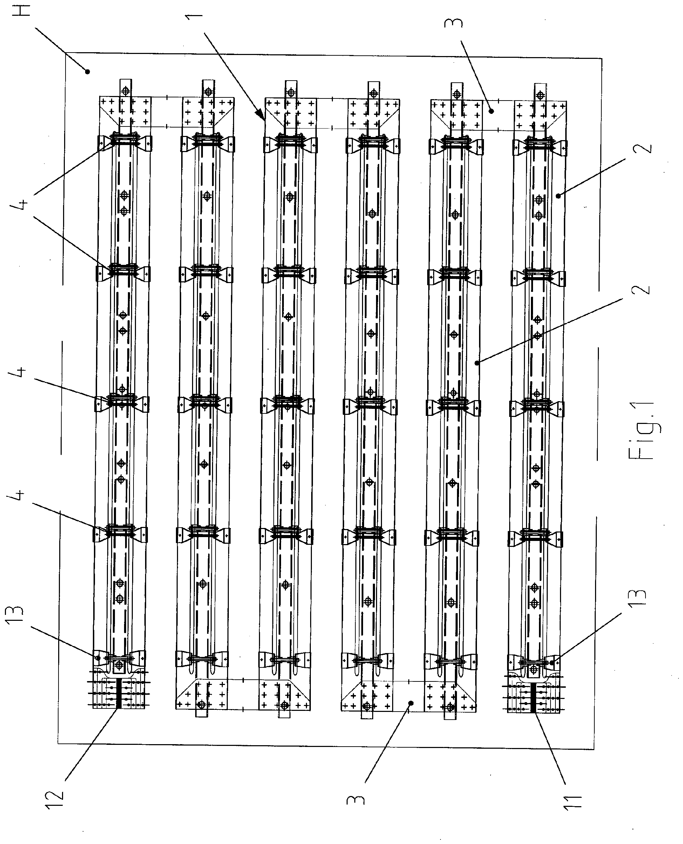

Eine erfindungsgemäße Heizleiteranordnung für eine an der Decke eines Ofens vorgesehene, hängende Ausführung ist in Figur 1 dargestellt.

Der Heizleiter -1- ist aus 6 parallel zueinander angeordneten Bändern -2-aufgebaut, die an ihren Enden wechselweise durch Verbindungsstücke -3-miteinander verbunden sind, wodurch sich eine mäanderförmige Heizleiteranordnung ergibt, die sich im Wesentlichen parallel zu einer horizontalen Ebene H erstreckt. Der Anfang und das Ende des Heizleiters -1- ist mit den Stromzuführungen -11- und -12- verbunden. Die einzelnen Bänder -2-sind entlang ihrer Breite in Bezug auf die horizontale Ebene H bogenförmig gekrümmt. Jedes Band -2- ist durch mehrere, im Wesentlichen in Längsrichtung des jeweiligen Bandes verschwenkbare Lagerelemente -4- gelagert.

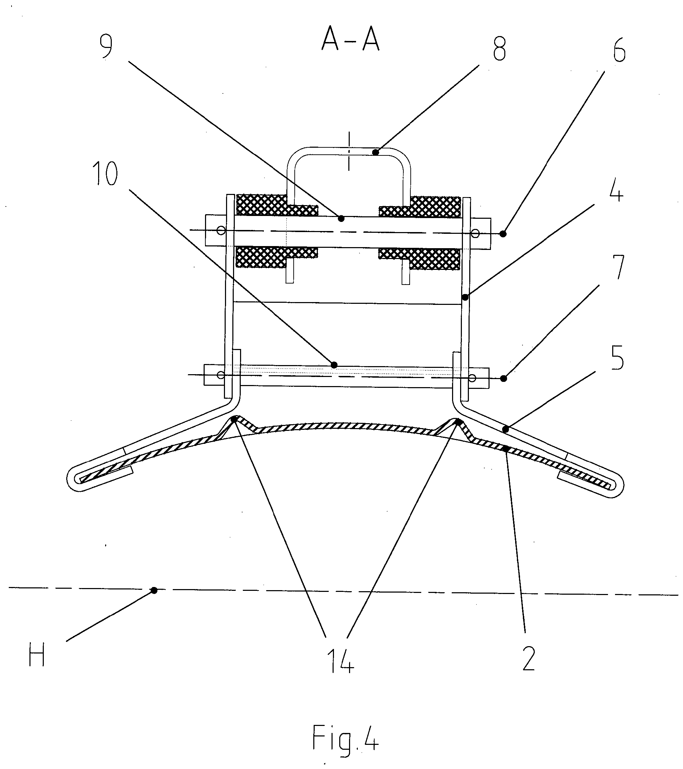

Die in unmittelbarer Nähe der Stromzuführungen -11- und -12- angeordneten Lagerelemente -13- sind feststehend. Der Aufbau der Lagerelemente -4- ist insbesondere aus Figur 4 zu entnehmen. Jedes verschwenkbare Lagerelement -4- besteht aus zwei parallelen, voneinander beabstandeten Schenkeln die an den gegenüberliegenden Enden über Lagerbolzen -9-und -10- mit Drehachsen -6- und -7- miteinander verbunden sind. Über den ersten Lagerbolzen -9- ist das Lagerelement -4- isoliert und verschwenkbar mit einem Trägerteil -8- verbunden. Mit dem zweiten Lagerbolzen -10- ist das Lagerelement -4- verschwenkbar mit einem Halteabschnitt -5- verbunden. Dieser Halteabschnitt -5- dient der Aufnahme des Bandes -2-. Er ist der Krümmung des Bandes -2- weitgehend angepasst und umschließt das Band -2-seitlich. Zur sicheren Fixierung wird das Band -2-mit dem Halteabschnitt -5-verschraubt oder vernietet. Um die Eigenstabilität des Bandes -2- bei Erwärmung noch weiter zu verbessern, ist das Band -2- in Längsrichtung mit zwei symmetrisch angeordneten Ausknickungen -14- versehen.

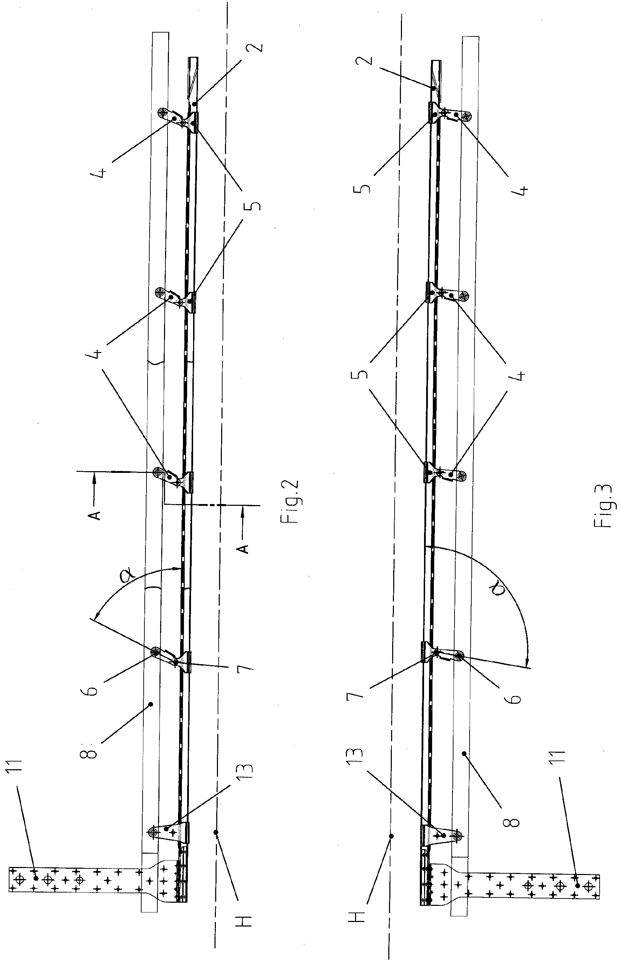

In Figur 2 ist die Heizleiteranordnung nach Figur 1 in vergrößertem Maßstab in Seitenansicht zu sehen.
Unmittelbar neben der Stromzuführung -11- ist das feststehende Lagerelement -13- vorgesehen, welches senkrecht zur horizontalen Ebene H ausgerichtet ist. Die danebenliegenden, verschwenkbaren Lagerelemente -4-sind hingegen so angeordnet, dass die Verbindungslinie der Drehachsen -6-und -7- einen von 90° abweichenden Neigungswinkel α zur horizontalen Ebene H aufweisen und zwar so, dass die zweite Drehachse -7- näher zum feststehenden Lagerelement -13- ausgerichtet ist als die erste Drehachse -6-.

In Figur 3 ist die Seitenansicht einer Heizleiteranordnung in liegender Ausführung wie sie im Bodenbereich eines Ofens zum Einsatz kommt, dargestellt. In diesem Fall sind die verschwenkbaren Lagerelemente -4- genau umgekehrt angeordnet und zwar so, dass die erste Drehachse -6- näher zum feststehenden Lagerelement -13- angeordnet ist wie die zweite Drehachse -7-. Mit einer derartigen Lagerung des Heizleiters wird erreicht, dass durch das Eigengewicht des Heizleiters -1- eine bestimmte Zugspannung in den einzelnen Bändern -2- in Richtung von den Stromzuführungen -11- und -12- weg erreicht wird, wodurch ein Durchbiegen oder Stauchen der Bänder -2- auch bei Betriebstemperatur vermieden wird.

## Patentansprüche

1. Elektrische Heizleiteranordnung zur Beheizung eines Ofens, wobei der Heizleiter (1) ein oder mehrere streifenförmige Abschnitte mit einer im Wesentlichen horizontal flächigen Ausdehnung aufweist, die mit einer bogenförmigen Krümmung in Bezug auf eine horizontale Ebene H versehen sind,
**dadurch gekennzeichnet,**
**dass** die streifenförmigen Abschnitte durch einzelne Bänder (2) gebildet werden, wobei die Bänder (2) entlang ihrer Breite die bogenförmige Krümmung in Bezug auf die horizontale Ebene H aufweisen und dass die einzelnen Bänder (2) durch mindestens ein im Wesentlichen in Längsrichtung des jeweiligen Bandes (2) verschwenkbares Lagerelement (4) abschnittsweise gelagert sind, das einen Halteabschnitt (5) aufweist, welcher der Krümmung des Bandes (2) angepasst ist und das Band (2) zumindest teilweise umschließt.

2. Elektrische Heizleiteranordnung nach Anspruch 1, **dadurch gekennzeichnet, dass** das verschwenkbare Lagerelement (4) zwei Drehachsen (6,7) aufweist, über die erste Drehachse (6) verschwenkbar mit einem Trägerteil (8) verbunden ist und über die zweite Drehachse (7) verschwenkbar mit dem Halteabschnitt (5) verbunden ist.

3. Elektrische Heizleiteranordnung nach Anspruch 2, **dadurch gekennzeichnet, dass** das verschwenkbare Lagerelement (4) aus zwei parallelen voneinander beabstandeten Schenkeln besteht, welche an den Drehachsen (6,7) an gegenüberliegenden Enden der Schenkel durch Lagerbolzen (9,10) miteinander verbunden sind und dass das Lagerelement (4) über den ersten Lagerbolzen (9) verschwenkbar und isoliert am Trägerteil (8) befestigt ist und über den zweiten Lagerbolzen (10) verschwenkbar mit dem Halteabschnitt (5) verbunden ist.

4. Elektrische Heizleiteranordnung nach einem der Ansprüche 1 bis 3, **dadurch gekennzeichnet, dass** mehrere einzelne Bänder (2) parallel zueinander angeordnet sind und ihre Enden wechselweise über Verbindungsabschnitte (3) miteinander verbunden sind, so dass die Heizleiteranordnung die Form eines Mäanders aufweist.

5. Elektrische Heizleiteranordnung nach Anspruch 4, **dadurch gekennzeichnet, dass** die Stromzuführungen (11,12) zur Heizleiteranordnung auf derselben Seite des Mäanders liegen.

6. Elektrische Heizleiteranordnung nach einem der Ansprüche 1 bis 5, **dadurch gekennzeichnet, dass** die verschwenkbaren Lagerelemente (4) derart angeordnet sind, dass die jeweilige Verbindungslinie der Drehachsen (6,7) einen Neigungswinkel α zur horizontalen Ebene H aufweist, derart, dass bei hängender Anordnung des Heizleiters (1) die zweite Drehachse (7) näher zur nächstliegenden Stromzuführung (11,12) ausgerichtet ist als die erste Drehachse (6) und bei liegender Anordnung des Heizleiters (1) die zweite Drehachse (7) weiter weg von der nächstliegenden Stromzuführung (11,12) ausgerichtet ist als die erste Drehachse (6).

7. Elektrische Heizleiteranordnung nach Anspruch 1 bis 6, **dadurch gekennzeichnet, dass** in unmittelbarer Nähe jeder Stromzuführung (11,12) ein feststehendes Lagerelement (13) für das jeweilige Band (2) angeordnet ist.

8. Elektrische Heizleiteranordnung nach einem der Ansprüche 1 bis 7, **dadurch gekennzeichnet, dass** die Bänder (2) entlang ihrer Krümmung zwei symmetrisch angeordnete Ausknickungen (14) aufweisen.

9. Elektrische Heizleiteranordnung nach einem der Ansprüche 1 bis 8,
**dadurch gekennzeichnet, dass** der Heizleiter (1) aus Molybdän oder Wolfram oder Legierungen dieser Metalle besteht.

10. Elektrische Heizleiteranordnung mit einem der Ansprüche 1 bis 9 **dadurch gekennzeichnet, dass** die Heizleiter (1) und die Lagerelemente (4,13) aus demselben Werkstoff bestehen.

11. Elektrische Heizleiteranordnung nach einem der Ansprüche 1 bis 10
**dadurch gekennzeichnet, dass** die Stromzuführungen (11,12) zum Heizleiter (1) lamelliert ausgeführt sind und mit stetig abnehmender Materialstärke in den Heizleiter (1) übergehen.

## Claims

1. An electrical heating conductor arrangement for heating a furnace, the heating conductor (1) having one or more strip-shaped portions with an essentially horizontal sheet-like extent, which are provided with an arcuate curvature with respect to a horizontal plane H, **characterized in that** the strip-shaped portions are formed by individual bands (2), the bands (2) having along their width the arcuate curvature with respect to the horizontal plane H, and **in that** the individual bands (2) are partially mounted by means of at least one bearing element (4) pivotably essentially in the longitudinal direction of the respective band (2), wherein the bearing element (4) has a holding portion (5) which is adapted to the curvature of the band (2) and which at least partially surrounds the latter.

2. The electrical heating conductor arrangement as claimed in claim 1, **characterized in that** the pivotable bearing element (4) has two axes of rotation (6, 7), is connected pivotably to a carrier part (8) via the first axis of rotation (6) and is connected pivotably to the holding portion (5) via the second axis of rotation (7).

3. The electrical heating conductor arrangement as claimed in claim 2, **characterized in that** the pivotable bearing element (4) is composed of two parallel legs which are spaced apart from one another and which are connected to one another at the axes of rotation (6, 7) at opposite ends of the legs by means of bearing bolts (9, 10), and **in that** the bearing element (4) is fastened to the carrier part (8) pivotably and in an insulating manner via the first bearing bolt (9) and is connected pivotably to the holding portion (5) via the second bearing bolt (10).

4. The electrical heating conductor arrangement as claimed in one of claims 1 to 3, **characterized in that** a plurality of individual bands (2) are arranged parallel to one another and their ends are connected to one another alternately via connection portions (3), so that the heating conductor arrangement is in the form of a meander.

5. The electrical heating conductor arrangement as claimed in claim 4, **characterized in that** the current feeds (11, 12) to the heating conductor arrangement lie on the same side of the meander.

6. The electrical heating conductor arrangement as claimed in one of claims 1 to 5, **characterized in that** the pivotable bearing elements (4) are arranged in such a way that the respective connecting line of the axes of rotation (6, 7) has an angle of inclination α to the horizontal plane H, in such a way that, in the case of a suspended arrangement of the heating conductor (1), the second axis of rotation (7) is oriented nearer to the nearest current feed (11, 12) than the first axis of rotation (6), and, in the case of a lying arrangement of the heating conductor (1), the second axis of rotation (7) is oriented further away from the nearest current feed (11, 12) than the first axis of rotation (6).

7. The electrical heating conductor arrangement as claimed in claims 1 to 6, **characterized in that** a stationary bearing element (13) for the respective band (2) is arranged in the immediate vicinity of each current feed (11, 12).

8. The electrical heating conductor arrangement as claimed in one of claims 1 to 7, **characterized in that** the bands (2) have two symmetrically arranged kinks (14) along their curvature.

9. The electrical heating conductor arrangement as claimed in one of claims 1 to 8, **characterized in that** the heating conductor (1) is composed of molybdenum or tungsten or alloys of these metals.

10. The electrical heating conductor arrangement as claimed in one of claims 1 to 9, **characterized in that** the heating conductor (1) and the bearing elements (4, 13) are composed of the same material.

11. The electrical heating conductor arrangement as claimed in one of claims 1 to 10, **characterized in that** the current feeds (11, 12) to the heating conductor (1) are designed to be laminated and merge with continuously decreasing material thickness into the heating conductor (1).

## Revendications

1. Agencement à conducteur chauffant électrique pour le chauffage d'un four, dans lequel le conducteur chauffant (1) présente une ou plusieurs sections en forme de bande avec une extension plane sensiblement horizontale, qui sont dotées d'une courbure arquée par rapport à un plan horizontal H,
**caractérisé en ce**
**que** les sections en forme de bande sont formées par des bandes individuelles (2), dans lequel les bandes (2) présentent le long de leur largeur la courbure arquée par rapport au plan horizontal H et en ce que les bandes individuelles (2) sont logées par section par au moins un élément de palier (4) sensiblement pivotant dans la direction longitudinale de la bande respective (2), qui présente une section de retenue (5), laquelle est adaptée à la courbure de la bande (2) et entoure au moins partiellement la bande (2).

2. Agencement à conducteur chauffant électrique selon la revendication 1, **caractérisé en ce que** l'élément de palier pivotant (4) présente deux axes de rotation (6, 7), est relié de manière pivotante à une pièce support (8) par le biais du premier axe de rotation (6) et est relié de manière pivotante à la section de retenue (5) par le biais du deuxième axe de rotation (7).

3. Agencement à conducteur chauffant électrique selon la revendication 2, **caractérisé en ce que** l'élément de palier pivotant (4) se compose de deux branches parallèles espacées l'une de l'autre, lesquelles sont reliées l'une à l'autre au niveau des axes de rotation (6, 7) à des extrémités opposées des branches par des boulons de palier (9, 10) et **en ce que** l'élément de palier (4) est fixé sur la pièce support (8) de manière isolée et pivotante par le biais du premier boulon de palier (9) et est relié à la section de retenue (5) de manière pivotante par le biais du deuxième boulon de palier (10).

4. Agencement à conducteur chauffant électrique selon l'une quelconque des revendications 1 à 3, **caractérisé en ce que** plusieurs bandes individuelles (2) sont agencées parallèlement l'une à l'autre et leurs extrémités sont reliées l'une à l'autre tour à tour par le biais de sections de liaison (3), si bien que l'agencement à conducteur chauffant a la forme d'un méandre.

5. Agencement à conducteur chauffant électrique selon la revendication 4, **caractérisé en ce que** les alimentations électriques (11, 12) à l'agencement à conducteur chauffant se situent sur le même côté du méandre.

6. Agencement à conducteur chauffant électrique selon l'une quelconque des revendications 1 à 5, **caractérisé en ce que** les éléments de palier pivotants (4) sont agencés de telle manière que la ligne de raccordement respective des axes de rotation (6, 7) présente un angle d'inclinaison α par rapport au plan horizontal H, de telle manière que dans le cas d'un agencement suspendu du conducteur chauffant (1), le deuxième axe de rotation (7) est orienté plus près de l'alimentation électrique (11, 12) la plus proche que le premier axe de rotation (6) et dans le cas d'un agencement couché du conducteur chauffant (1), le deuxième axe de rotation (7) est orienté plus loin de l'alimentation électrique (11, 12) la plus proche que le premier axe de rotation (6).

7. Agencement à conducteur chauffant électrique selon la revendication 1 à 6, **caractérisé en ce qu'**un élément de palier fixe (13) est agencé pour la bande respective (2) à proximité immédiate de chaque alimentation électrique (11, 12).

8. Agencement à conducteur chauffant électrique selon l'une quelconque des revendications 1 à 7, **caractérisé en ce que** les bandes (2) présentent le long de leur courbure deux flambages (14) agencés symétriquement.

9. Agencement à conducteur chauffant électrique selon l'une quelconque des revendications 1 à 8, **caractérisé en ce que** le conducteur chauffant (1) est composé de molybdène ou de tungstène ou d'alliages de ces métaux.

10. Agencement à conducteur chauffant électrique selon l'une quelconque des revendications 1 à 9, **caractérisé en ce que** les conducteurs chauffants (1) et les éléments de palier (4, 13) se composent du même matériau.

11. Agencement à conducteur chauffant électrique selon l'une quelconque des revendications 1 à 10, **caractérisé en ce que** les alimentations électriques (11, 12) au conducteur chauffant (1) sont réalisées de manière stratifiée et se transforment en conducteur chauffant (1) avec une épaisseur de matériau diminuant constamment.
